# EUROPEAN PATENT SPECIFICATION

(11) **EP 2 759 389 B1**
(45) Date of publication and mention of the grant of the patent: **16.06.2021**
(21) Application number: 13194686.5
(22) Date of filing: 27.11.2013
(51) Int. Cl.: B29C 44/34, C08J 9/06, C08J 9/08, C08J 9/00

(54) **Foam molding method.**
Schaumformungsverfahren.
Procédé de moulage de mousse.

(30) Priority: 28.01.2013 KR 20130009294
(43) Date of publication of application: 30.07.2014
(73) Proprietor: LG Electronics Inc., Seoul 150-721 (KR)
(72) Inventor: Jeong, Changhoon, 641-110 Kyungsangnam-do (KR); Jeong, Daejin, 641-110 Kyungsangnam-do (KR); Kim, Gangyoun, 641-110 Kyungsangnam-do (KR)
(74) Representative: Vossius & Partner Patentanwälte Rechtsanwälte mbB

(56) References cited:
- EP-A1- 0 260 843
- WO-A1-91/02023
- JP-A- 2004 250 540
- JP-A- 2010 162 765
- US-A- 5 234 963
- US-A- 5 710 189
- US-A1- 2003 144 369
- US-A1- 2008 190 924
- US-A1- 2012 061 867
- None

## Description

### BACKGROUND OF THE INVENTION

### 1. Field of the invention

The present invention relates to a foam molding method as per the preamble of claim 1. An example of such a method is disclosed by US 2008/190924 A.

### 2. Description of the Related Art

Foam molding is a method for producing foamed plastics by creating foams during a molding process and homogeneously dispersing the foams in a polymer resin. A general well-known foam molding is a method for molding foamed plastic products by simultaneously supplying a plastic raw material and a gas to a barrel to create a plastic/gas mixture and injecting the mixture into a die.

In this regard, a method for forcibly dissolving a gas in a melted resin is required, since solubility of gas is much low, and the gas is phase-changed into a supercritical fluid before feeding of the gas into the barrel and is then supplied together with a raw material. However, this method requires a device having a complicated structure to convert the gas into a supercritical fluid and this device is considerably expensive.

### SUMMARY OF THE INVENTION

Therefore, the present invention has been made in view of the above problems, and it is an object of the present invention to provide a foamed plastic having uniformly distributed pores therein, a foam molding method to homogeneously dissolve and disperse gas components in a melted resin in the process of molding the foamed plastic and a foaming agent used for the method.

The above objects of the present invention are achieved by the features defined in claim 1.

In accordance with an aspect of the present invention, the above and other objects can be accomplished by the provision of a foam molding method including rotating a screw provided in a barrel, feeding a granular or powdery raw material and a foaming agent for producing foams through a chemical reaction into the barrel, melting the fed raw material and producing a gas from the foaming agent, and phase-changing the produced gas into a supercritical fluid and mixing the gas with the melted raw material and injecting the mixture of the supercritical fluid and the melted raw material into a die.

During the phase-changing and the mixing, a residue of the foaming agent left after the gas production may be decomposed and further produces the gas. A temperature of the barrel during the phase-changing and the mixing may be higher than a temperature of the barrel during the melting.

The foaming agent may include a foaming compound for producing a gas through a thermal reaction, and a cell for accommodating the foaming compound, wherein the temperature of the barrel during the melting is higher than a melting point of the cell.

During the melting, a mixture of the raw material and the foaming agent may be compressed between the barrel and the screw while the mixture is moved along the barrel upon rotation of the screw.

The foaming agent may include sodium bicarbonate (NaHCO₃).

A foam molding method may include feeding a granular or powdery raw material and a foaming agent into a first zone of a barrel while a screw rotates, melting the raw material and producing a gas from the foaming agent in a second zone while the raw material and the foaming agent are moved along the barrel upon rotation of the screw, and further producing the gas from a residue of the foaming agent left after production of gas in the second zone, in a third zone after the second zone.

During the further producing the gas, the gas produced from the foaming agent may be phase-changed into a supercritical fluid.

In the second zone, a pressure applied to a mixture of the raw material and the foaming agent may be increased, as compared to the first zone.

A temperature of the barrel in the third zone may be higher than a temperature at which the gas is produced from the foaming agent in the second zone.

The foaming agent may include sodium bicarbonate, sodium carbonate (Na₂CO₃) may be produced as a thermal decomposition residue of the sodium bicarbonate in the second zone, and sodium oxide (Na₂O) may be produced as a thermal decomposition residue of the sodium carbonate in the third zone. The temperature of the second zone may be 180 to 220°C, and the temperature of the third zone may be 200 to 240°C.

The foaming agent may include a foaming compound for producing a gas through a thermal reaction, and a cell for accommodating the foaming compound, wherein the temperature of the second zone is equivalent to or higher than a melting point of the cell.

A foaming agent for producing a foamed plastic by producing a gas when a plastic raw material to be foam-molded is melted may include a granular or powdery foaming compound and a cell for accommodating the foaming compound, the cell being decomposed during melting of the raw material.

The foaming compound may include sodium bicarbonate.

The cell may include at least one of LDPE, PE and PP.

The foaming agent may further include a catalyst for activating a reaction of the foaming compound. The catalyst may be citric acid.

### BRIEF DESCRIPTION OF THE DRAWINGS

The above and other objects, features and other advantages of the present invention will be more clearly understood from the following detailed description taken in conjunction with the accompanying drawings, in which:
FIG. 1 shows an injection molding machine;
FIG. 2 is a view illustrating a foam molding method according to one embodiment of the present invention;
FIG. 3 illustrates another embodiment of the screw shown in FIG. 1;
FIG. 4 shows a phase diagram of carbon dioxide; and
FIG. 5 is a graph showing a concentration of gas dissolved in a melted resin according temperature and pressure.

### DETAILED DESCRIPTION OF THE PREFERRED EMBODIMENTS

Reference will now be made in detail to the preferred embodiments of the present invention, examples of which are illustrated in the accompanying drawings. Wherever possible, the same reference numbers will be used throughout the drawings to refer to the same or like parts.

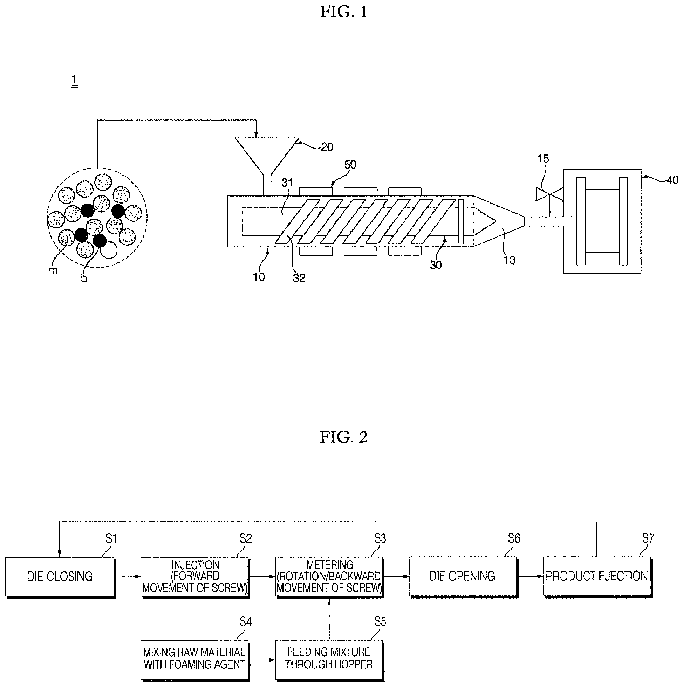

FIG. 1 shows an injection molding machine 1. Referring to FIG. 1, the injection molding machine 1 includes a hopper 20 through which a raw material m and a foaming agent b are fed, a barrel 10 filled with the raw material and the foaming agent fed through the hopper 20, a screw 30 which is disposed in the barrel 10, mixes the raw material with the foaming agent in the barrel 10 while rotating and injects a mixture of a resin obtained from the melted raw material (hereinafter, referred to as a "melted resin") and of a gas component produced by the foaming agent through a nozzle 13 provided at an end of the barrel 10 into a die 40, while moving along the barrel 10, and a heater 50 which applies heat to the barrel 10 and thereby melts the resin present in the barrel 10. The screw 30 includes a screw axis 31 supported in the barrel 10 so as to be rotatable, or movable forward and backward, and a blade 32 extending along the circumference of the screw axis 31.

A shut-off valve 15 may be provided on the end of the nozzle 13 or at an inlet of the die 40. The shut-off valve 15 functions to mechanically control a phenomenon in which a melted resin having a low viscosity flows down through the nozzle 13. Upon injection, the shut-off valve 15 opens and the melted resin is fed into the die 40. When the die 40 is opened or the screw 30 is moved backward for metering, the shut-off valve 15 is closed, thus preventing the melted resin from being leaked through the nozzle 13. In the case of a hot runner die, a valve provided at an end of the hot runner may replace the function of the shut-off valve 15, without separately mounting the shut-off valve 15.

The raw material m is preferably a non-thermosetting polymer plastic. In addition, the raw material m is fed in the form of a granule or powder.

The foaming agent causes a chemical reaction to produce a gas in the process of heating and pressurization in the barrel 10. The produced gas is dissolved in the melted resin in the barrel 10. That is, the foaming agent b is a chemical foaming agent which undergoes change in molecular structure through reaction under predetermined temperature or pressure conditions to produce a gas. According to the present invention, the chemical foaming agent mixed with the raw material is decomposed by heat applied during an injection process and produces a gas, and finally, a foamed plastic having fine pores is formed. The foaming agent is based on isocyanate used for foaming of polyurethane, an azo-, hydrazine or nitrogen-based compound used for foaming of water, thermoplastic plastics or elastomeric foams, an inorganic foaming agent such as sodium bicarbonate (NaHCO₃), or a foaming compound for foaming metal materials, such as powdery titanium hydride or zirconium (II) hydride. The chemical reaction which produces a gas from the foaming compound is irreversible and is not restored to an original substance in a melted resin.

The type and characteristics of the chemical foaming agent will be described in more detail. Azodicarbonamide (ADC) has a decomposition temperature of 200 to 230°C, the gas produced by decomposition is N₂, NH₃ and/or CO₂, gas yield reaches 220 ml/g according to temperature and pressure conditions and the decomposition is exothermic.

p-toluenesulfonylhydrazide (THS) has a decomposition temperature of 110 to 140°C, the gas produced by decomposition is N₂ and/or H₂O, gas yield reaches 120 ml/g according to temperature and pressure conditions and the decomposition is exothermic.

OBSH (4,4-oxybis (benzenesulfonyl hydrazide)) has a decomposition temperature of 140 to 165°C, gas produced by decomposition is N₂, CO₂ and/or H₂O, gas yield reaches 125 ml/g according to temperature and pressure conditions and the decomposition is exothermic.

5-phenyltetrazole (5-PT) has a decomposition temperature of 240 to 250°C, gas produced by decomposition is N₂, gas yield reaches 200 ml/g according to temperature and pressure conditions and the decomposition is exothermic.

Sodium bicarbonate (NaHCO₃) has a decomposition temperature of 150 to 230°C, gas produced by decomposition is CO₂ and/or H₂O, gas yield reaches 165 ml/g according to temperature and pressure conditions and the decomposition is endothermic. Citric acid is required as a catalyst for reaction.

The foaming agents mixed with the raw material may be selected from various types of the afore-mentioned foaming agents. Of these, sodium bicarbonate suitably controls temperature and pressure conditions of the melted resin while transported in the barrel 10 by rotation of the screw 30 and thereby provides advantages in view of reaction control and gas generation mechanism control. This will be described in more detail later.

In addition, the foaming agent preferably satisfies the following conditions: 1) it should emit gas at a set time and temperature of a foam molding process, 2) it should have a uniform particle size and superior disperability in the mixture, 3) it does not emit a great amount of heat and can control decomposition temperature, 4) decomposed gas has no corrosion, 5) foaming agent and a decomposition residue thereof are low in toxicity and are non-contaminant, 6) decomposition residue does not affect chemical and physical properties, 7) it has no effect on cross-linking or curing of polymers, 8) it produces much gas and is economical, and 9) it is generally used according to resin to be foam-molded and processing methods. Sodium bicarbonate is suited to these required conditions.

A ratio (weight ratio) of the raw material to the foaming agent preferably does not exceed 5% and, in the present embodiment, is 100:1 to 100:3 (raw material: foaming agent, based on weight ratio).

The foaming agent may be mixed in the form of a compound per se with the raw material (for example, powdery or granular sodium bicarbonate is mixed with the raw material), or may be fed in the form of a pellet of a master batch concentrated and dispersed together with the raw material. Alternatively, the compound may be incorporated into a predetermined carrier. The carrier is generally called a "cell", that is, a cross-sectional shape of which is a closed structure including two concentric circles formed by an outer circumferential surface and an inner circumferential surface of the carrier. The foaming compound is accommodated in a closed space defined by the inner circumferential surface. The carrier may comprise a plastic such as low-density polyethylene (LDPE), polyethylene (PE) or polypropylene (PP).

The gas produced by thermal decomposition of the foaming agent should be homogeneously mixed with the melted resin in the barrel 10. For this purpose, physical mixing by driving of the screw 30 and a phase of the substance produced by chemical decomposition of the foaming agent are essential. The substance produced from the foaming agent according to pressure and temperature conditions in the barrel 10 may be mixed in a gas phase with the melted resin. In this case, it takes a long time to mix the gas with the melted resin so that the gas is homogeneously dispersed in the melted resin and this operation is not easy in view of low solubility of gas.

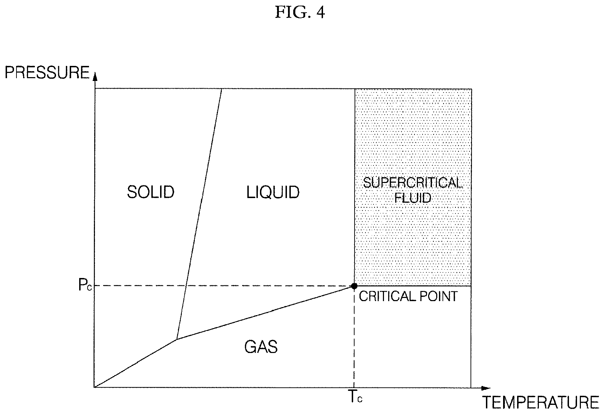

In general, a substance is phase-changed to a solid, liquid or gas according to temperature and pressure conditions. Under suitable temperature and pressure conditions, the substance reaches a state called "supercritical fluid (SCF)". Referring to FIG. 4, a supercritical fluid is defined as a substance at a temperature and pressure above its critical pressure (Pc) and critical temperature (Tc), which has inherent properties which are different from a general liquid or gas. A critical point means an uppermost limit at which a substance exists in liquid or gas phases in equilibrium. This phenomenon is explained from a phase diagram of FIG. 4. Carbon dioxide exists in a gas, liquid or solid phase at a pressure and temperature below the critical points and respective curves indicate pressure and temperature conditions at which two phases exist in equilibrium. That is, a curve between a liquid and a gas indicates a boiling point at individual pressure. As temperature or pressure increases along this curve, it reaches a critical point. Opposite changes that the liquid phase is decreased in density due to thermal expansion as a temperature or pressure increases, while the gas phase is increased in density as a pressure increases, continue. Then, at a high temperature and a high pressure above the critical point, two phases have the same density and distinction between the two phases is impossible. This state is referred as a supercritical state, which is easy to transform, freely flows and has fluid properties, and has a high solubility and a high diffusion degree, unlike a solid. For reference, the critical point of carbon dioxide is 73.8 bar at 31.1°C.

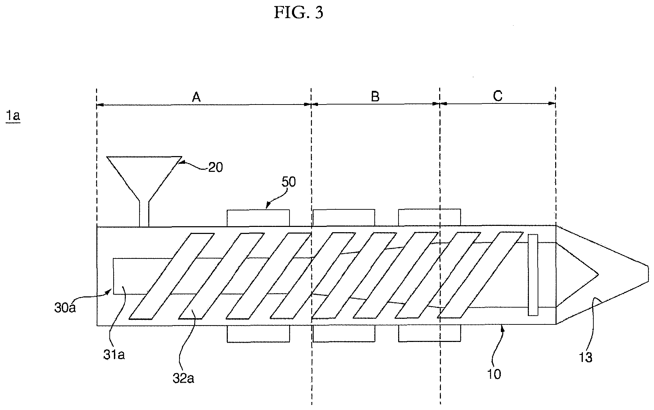

FIG. 2 is a view illustrating a foam molding process according to one embodiment of the present invention. FIG. 3 illustrates another embodiment of a screw shown in FIG. 1. Description of the foam molding process with reference to FIG. 2 below begins when metering is completed (see S3) and a die 40 is closed (S1). It will be understood that this state may be any process of the overall injection molding process using the injection molding machine 1. Implementation of the present invention does not necessarily begin from S1. In this regard, injection (S2) may be performed if the screw 30 moves forward after metering (S3). This is the same in the case of one of repeated injection cycles and in the case of a first injection cycle.

In a state in which a melted resin is filled in the barrel 10, that is, the melted resin is metered, a screw 30 moves forward and the melted resin is injected from the nozzle 13 into the die 40 (S2). The injection of the melted resin into the die 40 results in pressure drop, causing vaporization of gas components dissolved in the melted resin and formation of foams in the plastic. Accordingly, a final product cooled and hardened in the die 40 is a foamed plastic having uniformly formed fine pores.

Metering (S3) is a process of plasticizing a resin for next injection, after injection is completed. The screw 30 moves backward, corresponding to a predetermined metered amount (one-shot) upon rotation, a mixture of a raw material and a foaming agent (see S4) is fed in an amount corresponding to the metered amount through the hopper 20 (S5). The raw material is melted by heat applied from a heater 50 and friction by rotation of the screw 30. In particular, when the screw 30 rotates, the raw material and the foaming agent are mixed and melted, gradually transported toward the nozzle 13 and are then charged in an area between the barrel 10 and the screw 30.

Meanwhile, referring to FIG. 3, the raw material and the foaming agent fed into the barrel 10 pass through a first zone A, a second zone B and a third zone C, in order, while the screw 30 rotates. Hereinafter, respective zones will be described in detail.

The first zone A is a region in which the raw material and the foaming agent injected through the hopper 20 are fed into the barrel 10. The raw material and the foaming agent in the barrel 10 are heated by a heating operation of the heater 50. In this area, the raw material is melted, but chemical reaction of the foaming agent does not occur. In a case in which polypropylene is used as a raw material, a temperature of the first zone A may reach 180 to 220°C.

In particular, in a case in which the foaming agent is fed in the form of a cell, in the first zone A, in order to prevent a resin constituting a cell surrounding a foaming compound (hereinafter, referred to as a "carrier resin") from being melted, a type of the resin constituting the cell and an inner temperature and pressure of the barrel 10 are preferably controlled. The first zone A is referred to as a "feeding zone" in which feeding and mixing of the raw material and the foaming agent for next injection and melting of the raw material are performed therein.

In the second zone B, the raw material is melted and gas is produced from the foaming agent or the foaming compound via a thermal reaction. In a case in which sodium bicarbonate is used as the foaming compound, in accordance with the following equation 1, a primary reaction of sodium bicarbonate occurs to produce CO₂, and sodium carbonate (Na₂CO₃), CO₂ and H₂O remain as residues. In this case, citric acid (C₆H₈O₇H₂O) is used as a catalyst. Citric acid as the catalyst may be added as a mixture thereof with a cell-form foaming agent as described above. Alternatively, the citric acid may be fed as a mixture thereof with the raw material and the foaming compound or foaming agent.

[Equation 1] 2NaHCO₃ →Na₂CO₃ + CO₂ + H₂O

In particular, in a case in which the cell-form foaming agent is used, in the second zone B, the carrier resin is melted, chemical reaction of the foaming compound is facilitated and the produced gas is dissolved in the melted resin. The second zone B is a 2-phase state fluid in which the melted resin and the gas coexist.

Meanwhile, compression occurs in the second zone B while fluids move along the screw 30. As an amount of gas dissolved in the melted resin increases and pressure increases, the gas state approaches a supercritical state on a phase diagram.

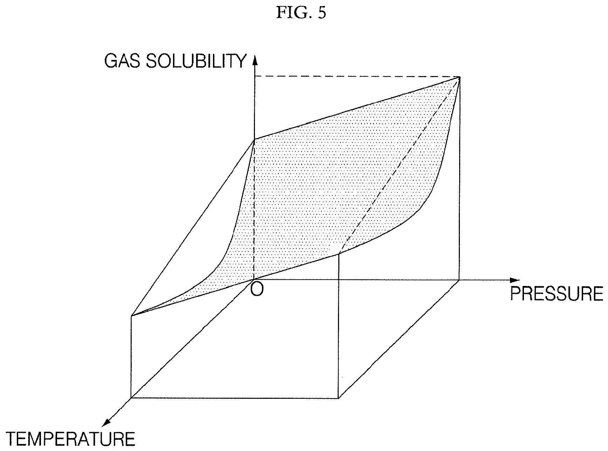

In order to increase pressure in the second zone B, in the present embodiment, the gap between the screw axis 31a and inner circumferential surface of the barrel 10 gradually decreases in a fluid movement direction and is not necessarily limited thereto. According to embodiments, a type of the blade 32a of the screw 30, a pitch gap of the blade 32a, and a gap between a tip of the blade 32a and the barrel 10 can be controlled. An additional pressurization device may be further provided. The second zone, in which fluids are compressed, is referred to as a "compression zone". In a case in which polypropylene is used as the raw material, the temperature of the second zone B reaches 180 to 220°C. As shown in FIG. 5, solubility of the gas tends to increase, as pressure increases. Accordingly, the increase in pressure in the second zone B enables the gas produced from the foaming agent to be more well dissolved in the melted resin.

In the third zone C, most of the raw material enters a melt state. The gas produced from the foaming agent reaches a supercritical state and fluids in the barrel 10 form one phase. The temperature and the pressure of the third zone C are at or above critical points of the gas.

In particular, in a case in which sodium bicarbonate is used as the foaming compound, in the third zone C, in accordance with the following Equation 2, decomposition of sodium carbonate occurs as a secondary reaction, carbon dioxide is produced and sodium oxide (Na₂O) is left as a residue.

[Equation 2] Na₂CO₃ → Na₂O + CO₂

In the third zone C, pressurization and heating should be performed for a sufficient time so that the gas reaches a supercritical state. In particular, the gas component should be homogeneously mixed in fluids. For this purpose, the shape of the blade 32a, the pitch gap of the blade, and rotation velocity of the screw may be determined so that fluids are slowly moved along the screw 30. The temperature of the third zone C may be higher than the temperature of the second zone B and is preferably 200 to 240°C. Here, when the temperature of the third zone C is kept higher than that of the second zone B, it is understood that the temperature of the third zone C falls within a temperature zone higher than the temperature of the second zone B among the temperature zones.

In the third zone C, most of the raw material is melted and reaches a state which can be injected through the nozzle 13. Accordingly, this is called "melting (metering) zone".

As described above, when metering and melting of the raw material are completed while the raw material passes through the feeding zone (A), the compression zone (B) and the melting zone (C), the screw 30 moves forward and an injection, in which the metered fluid is fed through the nozzle 13 into the die 40, is performed (S2). Due to sharp decrease in pressure in the die 40, the gas component dissolved in fluids is converted into a gas phase again, resulting in foaming of a plastic. At this time, the shut-off valve 15 is in an open state, and foaming is carried out according to a pressure decrease ratio (ΔP/Δt) while the fluid passes through the shut-off valve 15. According to embodiments, the shut-off valve 15 may be implemented by a valve enabling control of pressure decrease ratio.

After metering (S3), the die 40 is opened (S6) and the plastic foamed in the previous injection cycle is ejected from the die 40 (S7). Then, the die 40 closes again (S1), injection (S2) and metering (S3) are performed and molding of foamed plastic is repeated.

Meanwhile, while the resin is cooled in the die 40, most of the gas contributing to foaming is discharged from the foamed plastic. For example, carbon dioxide is discharged at 80% or more within 48 hours under suitable conditions. However, the residue left after production of gas from the foaming agent still exists in the foamed plastic. Examples of the residue include a carrier resin constituting the cell, sodium carbonate as a residue of the primary reaction of sodium bicarbonate, sodium oxide as a residue of the secondary reaction, and citric acid as the catalyst.

The foam molding method may be applied to extrusion molding as well as injection molding. This is because the extrusion molding is just different from injection molding in that the melted resin is not cooled in the die, and is the same as injection molding in that a hopper, a barrel and a screw are provided, and melting and mixing of the resin and chemical reaction of the foaming agent are induced in the barrel.

The foam molding method of the present invention is effective in producing foamed plastics having uniformly distributed pores. Accordingly, the foam molding method is advantageous in insulation property, durability and weight reduction.

In addition, the foam molding method of the present invention does not require an additional device (for example, a supercritical fluid producer) for adding a gas to a resin and is thus effective in producing foamed plastics with high quality in a simple manner.

Although embodiments have been described with reference to a number of illustrative embodiments thereof, it should be understood that numerous other modifications and embodiments can be devised by those skilled in the art that will fall within the scope of the claims.

## Claims

1. A foam molding method comprising:
rotating a screw (30) provided in a barrel (10);
feeding a granular or powdery raw material and a foaming agent for producing foams through chemical reaction into the barrel (10);
melting the fed raw material in the barrel at a predetermined temperature such that gas is produced from the foaming agent; **characterised by**
phase-changing the produced gas into a supercritical fluid and mixing the supercritical fluid with the melted raw material; and
injecting the mixture of the supercritical fluid and the melted raw material into a die (40).

2. The foam molding method according to claim 1, further comprising, during the phase-changing and mixing, producing further gas from a thermal decomposition residue of the foaming agent left after the gas production.

3. The foam molding method according to claim 1 or 2, wherein a temperature of the barrel (10) during the phase-changing and mixing is higher than the predetermined temperature of the barrel (10) during the melting.

4. The foam molding method according to any of preceding claims, wherein the foaming agent comprises:
a foaming compound for producing gas through thermal reaction; and
a cell for accommodating the foaming compound,
wherein the predetermined temperature of the barrel (10) during the melting is higher than a melting point of the cell.

5. The foam molding method according to any of preceding claims, wherein, during the melting, a mixture of the raw material and the foaming agent is compressed between the barrel (10) and the screw (30) while the mixture is moved along the barrel (10) upon rotation of the screw (30).

6. The foam molding method according to any of preceding claims, wherein the foaming agent comprises sodium bicarbonate (NaHCO3).

## Patentansprüche

1. Schaumformverfahren, das aufweist:
Drehen einer Schnecke (30), die in einem Zylinder (10) vorgesehen ist;
Zuführen eines körnigen oder pulvrigen Rohmaterials und eines Schaummittels zum Erzeugen von Schäumen durch eine chemische Reaktion in den Zylinder (10);
Schmelzen des zugeführten Rohmaterials im Zylinder bei einer vorgegebenen Temperatur, so dass ein Gas aus dem Schaummittel erzeugt wird; **gekennzeichnet durch** Phasenändern des erzeugten Gases zu einem überkritischen Fluid und Mischen des überkritischen Fluids mit dem geschmolzenen Rohmaterial; und
Injizieren des überkritischen Fluids und des geschmolzenen Rohmaterials in ein Formwerkzeug (40).

2. Schaumformverfahren nach Anspruch 1, das ferner während des Phasenänderns und des Mischens das Erzeugen von weiterem Gas aus einem nach der Gaserzeugung verbliebenen thermischen Zersetzungsrest des Schaummittels aufweist.

3. Schaumformverfahren nach Anspruch 1 oder 2, wobei eine Temperatur des Zylinders (10) während des Phasenänderns und Mischens höher als die vorgegebene Temperatur des Zylinders (10) während des Schmelzens ist.

4. Schaumformverfahren nach einem der vorhergehenden Ansprüche, wobei das Schaummittel aufweist:
eine Schaumverbindung zum Erzeugen von Gas durch eine thermische Reaktion; und
eine Zelle zum Aufnehmen der Schaumverbindung,
wobei die vorgegebene Temperatur des Zylinders (10) während des Schmelzens höher als ein Schmelzpunkt der Zelle ist.

5. Schaumformverfahren nach einem der vorhergehenden Ansprüche, wobei während des Schmelzens eine Mischung des Rohmaterials und des Schaummittels zwischen dem Zylinder (10) und der Schnecke (30) verdichtet wird, während die Mischung bei der Drehung der Schnecke (30) längs des Zylinders (10) bewegt wird.

6. Schaumformverfahren nach einem der vorhergehenden Ansprüche, wobei das Schaummittel Natriumbicarbonat (NaHCO₃) aufweist.

## Revendications

1. Procédé de moulage de mousse, comprenant :
la rotation d'une vis (30) disposée dans un cylindre (10) ;
le refoulement d'une matière première pulvérulente ou granulaire et d'un agent moussant pour produire des mousses par réaction chimique dans le cylindre (10) ;
la fusion de la matière première refoulée dans le cylindre à une température définie, de manière à générer un gaz à partir de l'agent moussant ; **caractérisé par** le changement de phase du gaz généré en un fluide supercritique, et le mélange du fluide supercritique avec la matière première fondue ; et
l'injection dans une matrice (40) du mélange du fluide supercritique et la matière première fondue.

2. Procédé de moulage de mousse selon la revendication 1, comprenant en outre, pendant le changement de phase et le mélange, la production d'un autre gaz à partir d'un résidu de décomposition thermique de l'agent moussant laissé après la génération de gaz.

3. Procédé de moulage de mousse selon la revendication 1 ou la revendication 2, où la température du cylindre (10) pendant le changement de phase et le mélange est supérieure à la température définie du cylindre (10) pendant la fusion.

4. Procédé de moulage de mousse selon l'une des revendications précédentes, où l'agent moussant comprend :
un composé moussant pour la génération de gaz par réaction thermique ; et
une cellule destinée à recevoir le composé moussant,
où la température définie du cylindre (10) pendant la fusion est supérieure au point de fusion de la cellule.

5. Procédé de moulage de mousse selon l'une des revendications précédentes, où, pendant la fusion, un mélange de la matière première et de l'agent moussant est comprimé entre le cylindre (10) et la vis (30) pendant que le mélange est transporté le long du cylindre (10) par rotation de la vis (30).

6. Procédé de moulage de mousse selon l'une des revendications précédentes, où l'agent moussant comprend du bicarbonate de sodium (NaHCO3).
